# EUROPEAN PATENT APPLICATION

(11) **EP 2 543 746 A1**
(43) Date of publication of application: **09.01.2013**
(21) Application number: 11861327.2
(22) Date of filing: 15.04.2011
(51) Int. Cl.: C22B 19/20, C22B 3/00, C22B 1/02

(54) **HYDROMETALLURGICAL METHOD FOR THE RECOVERY OF ZINC IN A SULPHUR MEDIUM FROM SULPHURED ZINC CONCENTRATES**

(71) Applicant: Tam 5, S.L., 28016 Madrid (ES)
(72) Inventor: TAMARGO GARCIA, Francisco José, E-28016 Madrid (ES)
(74) Representative: Tari Lazaro, Aida
(86) International application number: PCT/ES2011/070265
(87) International publication number: WO 2012/140284

(57) **Abstract**

The zinc concentrate is subjected to the following stages:
a. Roasting of at least part of the zinc concentrate.
b. Neutral leaching where zinc oxide is dissolved.
c. Acid leaching where zinc ferrites are leached.
d. Reduction of the Fe⁺⁺⁺ contained in the solution to Fe⁺⁺ by means of the addition of zinc concentrate.
e. Neutralization of the acidity in the solution with calcine.
h. Oxidation of iron and precipitation of jarosite, free of contaminating solids, by means of the injection of oxygen or oxygen-enriched air and the addition of an alkali or an alkaline salt.

Additionally, following the neutralization stage (e), it is possible to incorporate a stage (f) to re-leach the residue for the precipitation of arsenic and allied impurities, and a stage (g) of cementation of Cu, and following stage (c) a stage (i) of reduction of iron and direct leaching.

## Description

The present invention describes a hydrometallurgical method for the recovery of zinc and other valuable metals, with a high extraction rate, and the generation of clean residues during the production of electrolytic zinc starting from sulphidic zinc concentrates. The method is particularly suitable for the treatment of different kinds of zinc concentrates and is very well adapted to those plants that use processes known as jarosite, goetite or direct leaching, improving the results both in relation to the efficiency of the recovery of metals and regarding the quality of the residue generated.

### Background of the Invention

In order to obtain zinc metal starting from its raw materials, mainly zinc sulphide concentrates, both the pyrometallurgical and the hydrometallurgical routes have been used, though the first of these is in clear retreat due to the high operating costs along with environmental problems. Hydrometallurgical processes mostly follow the RLE line (Roasting, Leaching, Electrowinning), though there do exist a very few plants that avoid roasting the concentrates, either because they use direct leaching of concentrate under pressure in autoclaves or they use direct leaching at atmospheric pressure.

Up to the middle of the decade of the '60s, electrolytic zinc plants used a neutral leaching and a weak acid leaching stages in the leaching area. In this way they managed to extract the zinc content as oxide in the calcine, the product resulting from roasting, while the zinc combined with the iron in the form of zinc ferrites was not leached. With this process zinc recoveries of between 85 and 90% were obtained, leaving behind a residue in which the zinc ferrites were concentrated, with a zinc content of 17-20%.

Starting in 1965 the known as jarosite process started to be used at the industrial level, as described in documents ES 34601, ES 385575 and NO 108047, which meant an important step towards successfully increasing the recovery of zinc to above 90%. In addition to neutral leaching, the process also considers two or more stages of leaching where the solubilization of the zinc and iron contained in zinc ferrites is produced in the form of zinc sulphate (ZnSO₄) and ferric sulphate (Fe₂(SO₄)₃), at the same time that is possible to separate a residue containing the lead and silver contained in the calcine. Afterwards, this solution containing Fe⁺⁺⁺ in the form of sulphate and a residual acidity necessary for keeping the Fe⁺⁺⁺ in solution is treated in the presence of a cation such as Na⁺, K⁺, 1/2Pb⁺⁺, NH₄⁺ or H₃O⁺ with calcine under defined conditions for lowering the acidity and thereby precipitating the iron in the form of jarosite, a basic sulphate with the formula Me(SO₄)₂Fe₃(OH)₆, where Me can be one of the cations mentioned above. Later on the incorporation of an acid washing stage of the jarosite allowed to increase the recovery up to 97%. This process is efficient and its operating cost is very competitive.

A variant on the jarosite process is what is known as the conversion process described in document CA 1094819, which differs from the above in that both the leaching of ferrites and the precipitation of iron as jarosite take place simultaneously without it being possible in this case to separate the lead-silver residue, obtaining at the end a single residue containing all the iron in the form of jarosite along with lead, silver and silica contained in the calcine.

Another process developed a little later than the one using jarosite is what is known as the goetite process described in document CA 873262. As in the case of the jarosite process, this process consists of a neutral leaching stage and two or more stages of acid leaching working in counter-current, and where the ferrites are leached at the same time as being able to separate a lead-silver residue. The solution resulting from the acid leaching is treated with zinc concentrate in order to reduce ferric iron (Fe⁺⁺⁺) to ferrous iron (Fe⁺⁺). After that, there is a pre-neutralization stage, where part of the existing acidity is neutralized with calcine followed by a precipitation stage of the iron in the form of goetite (FeO(OH)), also using calcine for neutralizing the acidity generated in the formation of goetite and oxygen for oxidizing Fe⁺⁺ to Fe⁺⁺⁺. This process produces a residue that is somewhat more rich in iron, between 30 and 40%, while in the case of jarosite, the residue usually contains between 28 and 32% of iron. Nevertheless, the recovery of zinc by means of this process is less than in the case of jarosite since, while with jarosite the final residue normally contains 3-4% of zinc, with goetite the final residue contains up to 8-10% of zinc.

A variant on the goetite process uses paragoetite with results similar to the above.

Nowadays there are a certain number of electrolytic zinc plants combining the traditional process (RLE) with direct leaching of concentrates. The normal procedure in these plants is to obtain a final residue containing both the iron (in most cases in the form of jarosite) and the lead, silver and silica contained in the treated raw materials.

The main drawbacks of these processes can be summarized below:
- The recovery of zinc, though acceptable, in the best of cases does not exceed 97%, while in the majority of plants using these processes the overall recovery varies between 94 and 96.5%.
- In the best of cases the percentage of lead and silver recovered with the lead-silver residue does not in general exceed 60-70% of the total of these metals contained in the calcine; in many of those plants the recovery of these metals is frequently of the order of 50%. The rest is lost together with the iron residue.
- The recovery of copper does not exceed 80%, since the iron residue contains appreciable quantities of this metal.
- The content of impurities accompanying the iron residue, jarosite, goetite or paragoetite (zinc and lead already mentioned, along with arsenic and/or copper in the case of treating zinc concentrates with appreciable contents of these elements) means that the residue cannot be used for any other process, so it has to be stored in safety ponds, constituting a major environmental liability. In the case of jarosite, environmental regulations do not allow it to be stored as it is generated in the manufacturing process for zinc, and it therefore has to be rendered inert by mixing it with lime and cement (jarofix process), before it can be stored in safety ponds.
- Nowadays there exist certain countries which ban the storage of this kind of residue (Netherlands, Japan, Australia), while another group of countries allow its storage in existing ponds but no longer permit the construction of new storage ponds (France, Belgium, Germany). This situation is becoming more restrictive as environmental pressure grows, demanding cleaner and more efficient technologies for the production of electrolytic zinc.

As a consequence of what has been described above, any novel technology sought to be applied in this field would have to comply with the requisites of achieving - and at a competitive cost - the maximum recovery of metals and of generating environmentally acceptable residues, which can be favourably used in other industrial processes without any need to require permanent storage, something which, as we have already mentioned, is not allowed in some countries and it is expected that this ban will be taken up by more countries in the not too distant future. In this regard, during the last 30 years intensive research work has been conducted in the field of zinc in order to search for a process that will avoid storing the iron residues by means of a process that is easy to handle, economically competitive and which has a high yield in the recovery of metals, though so far no satisfactory solution has been found. One of the many examples that can be cited of these works is described in document US 4305914 which tries to achieve a precipitate of jarosite with a low content of non-ferrous metals, which would permit the jarosite to be transformed later on into a marketable product. Proof of the lack of success that has been achieved is that right now none of these processes that tried to improve the quality of the iron residue is being used and it continues to be stored in safety ponds, with the exception of a plant that generates hematite and those which use pyrometallurgical process for the treatment of the residues.

Consequently, an objective of the present invention is to provide a hydrometallurgical method for the recovery of zinc in sulphuric medium starting from sulphidic zinc concentrates that will permit to achieve high rates of metals recovery.

Another objective of the present invention is to have a hydrometallurgical method for the recovery of zinc in sulphuric medium starting from sulphidic zinc concentrates in which an environmentally acceptable iron residue is obtained that can be used in other industrial processes, avoiding its storage in safety ponds.

### Description of the Invention

The present invention meets the requisites mentioned above for a novel technology which seeks to displace the existing ones: competitive cost, high recovery rate of metals and generation of clean residues, capable of being reutilized in other industrial processes.

The process is based on Fe⁺⁺⁺ first being reduced to Fe⁺⁺ in the solution resulting from acid leaching and which is then oxidized once more to Fe⁺⁺⁺ before being precipitated as jarosite. This allows the acidity accompanying the Fe in the solution to be neutralized before entering the jarosite stage, separating the solids generated during the neutralization so that they can be recycled to the acid leaching stage, and on the other hand in the actual stage of oxidation of iron and precipitation of jarosite a neutralizing element, oxygen, is added which when it oxidizes Fe⁺⁺ to Fe⁺⁺⁺ consumes a sufficient quantity of the acid generated during the precipitation of jarosite so as to allow the jarosite stage to work under conditions of acceptable acidity, as is demonstrated later on.

The present invention describes a hydrometallurgical method for the recovery of zinc in sulphuric medium starting from sulphidic zinc concentrates which, in its most general case, comprises the following stages:
a. Roasting, where the sulphides are converted into oxides
b. Neutral leaching where the zinc oxide (calcine) is dissolved in sulphuric acid in the form of spent electrolyte in order to obtain a solution of zinc sulphate which is sent to the purification stage
c. Acid leaching where the zinc ferrites are leached by means of sulphuric acid in the form of spent electrolyte and concentrated sulphuric acid, generating a residue wherein the lead, silver and gold contained in the concentrates are concentrated and a solution rich in zinc sulphate and ferric sulphate
d. Reduction of the Fe⁺⁺⁺ contained in the solution resulting from stage (c) to Fe⁺⁺ by means of the addition of zinc concentrate, at a temperature between 80°C and the boiling point of the solution, where the residue containing elemental sulphur formed according to reaction (5) and unreacted zinc sulphide is recycled to the roasting furnace, while the solution containing primarily zinc sulphate and ferrous sulphate passes to stage (e)
e. Neutralization with calcine of the acidity in the solution resulting from the reduction stage of Fe⁺⁺⁺ to Fe⁺⁺
f. Releaching of the residue from the Neutralization (e) with spent electrolyte at the temperature of the reaction maintaining the acidity at between 4 and 10 g/l, reduction of Fe⁺⁺⁺ to Fe⁺⁺ with zinc concentrate and precipitation of arsenic and other allied impurities from the solution.
g. Cementation of Cu from the solution resulting from stage (e) by means of the addition of zinc dust
h. Oxidation of iron and precipitation of jarosite from the solution free of contaminating solids resulting from stage (g) by means of the injection of oxygen or oxygen-enriched air and the addition of an alkali or an alkaline salt
i. Reduction of iron and direct leaching, in those processes where RLE processes and direct leaching coexist, where the solution coming from the acid stage (c) is treated with zinc concentrates and spent electrolyte at the same time as injecting oxygen or oxygen-enriched air at a temperature no less than 80°C and no greater than the boiling point of the solution, keeping the acidity sufficiently high for preventing the precipitation of jarosite. Unreacted solids are combined with the lead-silver residue from the acid leaching, though they can alternatively be subjected to a flotation process in order to remove elemental sulphur, while the solution would pass directly to the neutralization stage (e). This stage can equally be applied both to those processes that use autoclaves under pressure and to those which work at atmospheric pressure for the direct leaching of part of the concentrates

Stages (f) and (g) are only for concentrates with high arsenic and copper contents. Stage (i) is only for when the RLE process is combined with direct leaching.

Given that in the present invention the iron is eliminated in the form of jarosite, the route that is followed seems in principle to be a contradiction, but surprisingly it is precisely this route that allows us to achieve the final target of generating a jarosite residue free of impurities and suitable for later use, and at the same time it achieves a high recovery rate for the large majority of valuable metals that accompany zinc in its concentrates.

Indeed, the solution resulting from the acid stages, containing the greater part of the iron in ferric form (normally between 5 and 25 g/l of total Fe, out of which just 1-2 g/l are as Fe⁺⁺ and the rest as Fe⁺⁺⁺), along with a certain acidity (between 10 and 70 g/l) necessary for keeping the Fe⁺⁺⁺ in solution, is initially treated with zinc concentrate in order to convert Fe⁺⁺⁺ into Fe⁺⁺. In a later stage, the acidity is neutralized with calcine and copper is then cemented with zinc dust, obtaining a neutral solution free of contaminating solids which fundamentally contains zinc sulphate and ferrous sulphate. Finally, simultaneously taking place are the oxidation of Fe⁺⁺ to Fe⁺⁺⁺ and precipitation of jarosite by means of injecting oxygen and the addition of the necessary quantity of alkali (NaOH, Na₂Co₃, NH₃) for the formation of jarosite depending on the amount of iron precipitated. The correct functioning of stage (h) is only possible due to the existence of the earlier stages (d) and (e).

The novel process presented here provides a satisfactory solution to all the problems mentioned above, achieving the following objectives:
- High recovery rates are achieved for zinc, lead, silver and gold, above 99% for each of these metals, something which had never before been managed with any of the processes existing so far. The recovery of copper is greater than 90%.
- The operating cost competes favourably with the jarosite process, which is the one with the lowest cost so far.
- Existing zinc plants can be adapted for using this novel process very easily and in a short space of time.
- Owing to the high recovery rate of valuable metals present and to the high current price of the raw materials, it would even be possible to treat some of the existing storage ponds for these residues, obtaining an economic profit, at the same time as remedying an environmental liability as a consequence of past industrial practices.
- Finally, and most importantly, a clean jarosite residue is generated, free of any impurity which could prevent its utilization in other industrial processes such as cement manufacture for example, where there exists sufficient capacity for being able to treat the jarosite generated in zinc plants. In this way an environmental liability is eliminated which has so far implied the greatest drawback for the hydrometallurgical processes commonly used in the production of electrolytic zinc.

### Brief description of the drawings

Figure 1 shows a flow diagram of the process subject matter of the invention.
Figure 2 shows a flow diagram of the process subject matter of the invention when the zinc concentrates have low contents of copper.
Figure 3 shows a flow diagram of the process subject matter of the invention when the zinc concentrates have low contents of copper and arsenic.

### Detailed description of a preferred embodiment

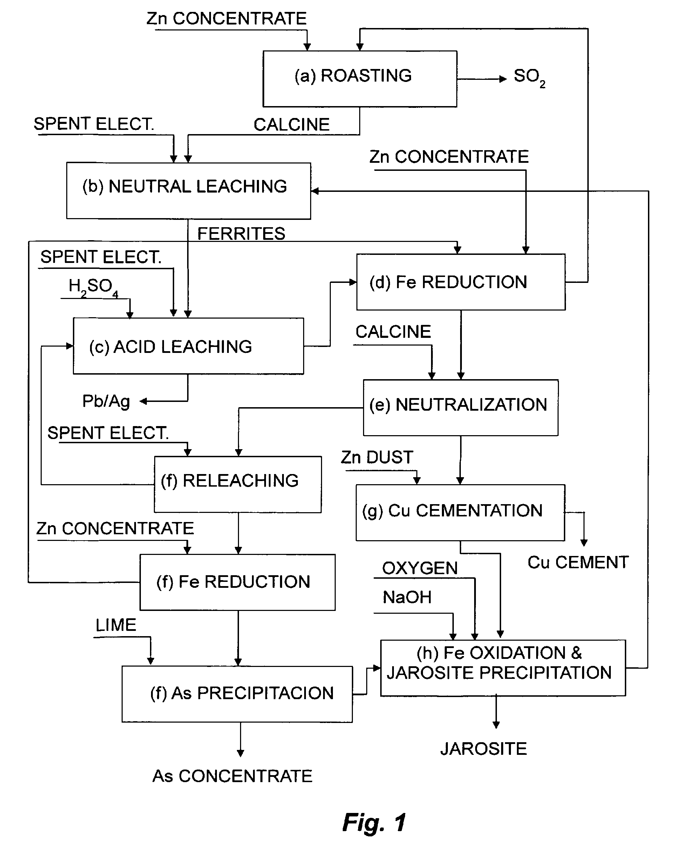

In the most general case, for concentrates with a high content in arsenic and copper, the hydrometallurgical method of the invention comprises the following stages. See figure 1.
a) Roasting of the sulphidic zinc concentrate in order to obtain roasted zinc concentrate (calcine) and sulphur dioxide, which is then converted into sulphuric acid. The main reactions taking place in the roasting furnace are:

   (1) 2ZnS + 3O₂ = 2ZnO + 2SO₂

   (2) ZnO + Fe₂O₃ = ZnFe₂O₄
b) Neutral leaching, where the calcine is leached with sulphuric acid, specifically with spent electrolyte which is returned from the electrolysis cells. In this stage the zinc oxide contained in the spent electrolyte is leached, generating a zinc sulphate solution which passes to the purification stage, while the insoluble zinc ferrites (Fe₂O₃.ZnO) generated in the roasting stage remain in the slurry and pass to the following stage. The main reaction in this stage is:

   (3) ZnO + H₂SO₄ = ZnSO₄ + H₂O
c) Acid leaching, which comprises one or several stages working in counter-current, where the leaching of the zinc ferrites is carried out at atmospheric pressure with spent electrolyte and sulphuric acid under temperature conditions of between 80°C and boiling point, and maintaining an acidity of between 10 and 140 g/l. In this stage(s) a residue is generated in which is concentrated all the lead, silver and gold contained in the calcine, which can be utilized for the recovery of these metals. The resulting solution, containing 10-70 g/l of acidity and 5-25 g/l of Fe⁺⁺⁺, passes to the following stage. The main reaction taking place in this stage is:

   (4) Fe₂O₃.ZnO + 4H₂SO₄ = ZnSO₄ + Fe₂(SO₄)₃ + 4H₂O
d) Reduction of iron, where reduction of the ferric ion to the ferrous ion takes place by means of treatment at atmospheric pressure of the solution coming from the previous stage (c) with zinc concentrate at temperatures lying between 80°C and the boiling point of the solution. The main reaction in this stage is:

   (5) Fe₂(SO₄)₃ + ZnS = 2FeSO₄ + ZnSO₄ + S°

   In this stage the acidity remains practically equal, no acid is consumed in reaction (5).
   The residue resulting from this stage (d), containing elemental sulphur according to reaction (5) and the unreacted excess ZnS can be recycled to the roasting furnace, while the solution, containing mainly ZnSO₄, FeSO₄ and H₂SO₄ along with a small quantity of Fe₂(SO₄)₃ (between 0.5 and 1 g/l of Fe⁺⁺⁺), passes to the following stage.
e) Neutralization, where the acidic solution coming from the previous stage is neutralized with calcine according to reaction (3), maintaining at the end the acidity of between 10 g/l y pH 5.2 at the actual temperature of the reaction.
   The main reactions taking place in this stage are:

   (3) H₂SO₄ + ZnO = ZnSO₄ + H₂O

   (6) Fe₂(SO₄)₃ + 6H₂O = 2Fe(OH)₃ + 3H₂SO₄

   Most of the iron in solution, in the form of Fe⁺⁺ produced in stage (d) according to reaction (5), does not precipitate out and remains in solution, while the iron present as Fe⁺⁺⁺ precipitates out as ferric hydroxide according to reaction (6).
   In this way, by neutralizing the acidity present in the solution coming from stages (c) and (d) with calcine in this stage, the use of calcine in stage (h) for oxidation of iron and precipitation of jarosite is avoided.
   The residue from this stage is returned to the acid leaching (c) in the case of concentrates with low contents of arsenic which do not have any significant influence on the final composition of the jarosite, or to the following stage (f) when the concentrates have arsenic contents that could affect the quality of the jarosite produced. In this latter case, the neutralization stage can be divided into two phases: a first phase in which the acidity contained in the solution coming from stage (d) is partially neutralized to a range of 5-15 g/l; the solid is then separated and returned to the acid leaching stage (c), while the resulting solution is again neutralized with calcine until reaching a pH of between 3.8 and 5.2. The solid is sent to the arsenic separation stage (f), while the solution is sent either directly to the jarosite stage (h) or to stage (g) if copper needs to be separated from the solution in order to avoid contamination of the final jarosite residue.
f) Separation of arsenic, when treating concentrates with high As content, the residue from stage (e) is treated with exhausted electrolyte at low acidity (4-10 g/l) and low temperature (30-70°C) and in the resulting solution the Fe⁺⁺⁺ is reduced to Fe⁺⁺ with zinc concentrate in order to then separate out the unreacted solids, precipitating out the arsenic and other allied impurities, for example, with Ca(OH)₂, CaCO₃, or NaSH. In the context of this document allied impurities are regarded as being those which present a chemical behaviour similar to that of arsenic, such as for example antimony and germanium which dissolve and precipitate under similar pH conditions. The residue from the leaching returns to stage (c) and that from the reduction of iron to stage (d), while the solution, following precipitation of the arsenic, is sent to stage (h). The As precipitate, containing As and Cu as valuable elements, can be sent to a copper foundry for later processing.
g) Cementation of copper with zinc dust, only in the case of treating concentrates with a high copper content. For this the solution coming from stage (e) is treated with zinc dust in order to cement the copper in the form of metallic cement according to the following reaction:

   (7) CuSO₄ + Zn° = Cu° + ZnSO₄

   Reaction (7) takes place by default, in such a way that there always remains a certain amount copper in solution (of the order 100-200 mg/l), which is sufficient for favouring the oxidation reaction (8) in the following stage (h) without thereby significantly contaminating the final jarosite residue. The residue of metallic cements is sent to the purification cements treatment stage, where the recovery of copper is carried out. The solution, free of contaminating solids, passes to the following stage (h).
h) Oxidation of iron and precipitation of jarosite, where the oxidation of Fe⁺⁺ to Fe⁺⁺⁺ and the precipitation of jarosite take place simultaneously. For this, the neutralized solution free of solids coming from stage (e) or (f) is treated at atmospheric pressure and at a temperature of between 80°C and the boiling point of the solution, injecting oxygen or oxygen-enriched air (the necessary amount for facilitating the oxidation of Fe⁺⁺ to Fe⁺⁺⁺ and adding an alkali (NaOH, Na₂CO₃ or NH₃) in the required proportion for the formation of jarosite in accordance with the stoichiometry of reaction (9), maintaining an acidity of between pH 2 and 15 g/l. In this way oxidation of Fe⁺⁺ to Fe⁺⁺⁺ and precipitation of Fe⁺⁺⁺ as jarosite take place simultaneously, according to the following reactions:

   (8) 4FeSO₄ + O₂ + 2H₂SO₄ = 2Fe₂(SO₄)₃ + 2H₂O

   (9) 3Fe₂(SO₄)₃ + 2MeOH + 10H₂O = 2[Fe₃(SO₄)₂(OH)₆]Me + 5H₂SO₄

   Where Me can be Na⁺ or NH₄⁺.
   In accordance with these reactions, for every 1 g/l of Fe⁺⁺⁺ precipitated as jarosite 1.46 g/l of sulphuric acid are generated, of which 0.88 g/l is consumed in turn for every g/l of Fe⁺⁺ that is oxidized to Fe⁺⁺⁺. The resulting balance is therefore that for every g/l of Fe⁺⁺ oxidized to Fe⁺⁺⁺ and precipitated as jarosite, the acidity of the solution increases by 0.58 g/l. In accordance with this, a solution containing 5 g/l of Fe⁺⁺ at the entrance to this stage would have a maximum acidity of 3 g/l at the end of this stage, while, in the event of having 25 g/l of Fe⁺⁺ at the entrance, the resulting final solution would have a maximum acidity of 15 g/l (this is in the event of all the Fe⁺⁺⁺ precipitating out, though it is known that with this acidity at least 1.5 - 2.0 g/l of Fe⁺⁺⁺ remain in solution so the final acidity will really be between 12 and 13 g/l), both of which are favourable conditions for achieving an efficient precipitation of jarosite.
   If, instead of using an alkali such as those already mentioned, a sodium or ammonium salt (Na₂SO₄ or (NH₄)₂SO₄) is used in order to provide the cation needed for the formation of jarosite, then reaction (9) would be replaced by the following:

   (10) 3Fe₂(SO₄)₃ + Me₂SO₄ + 12H₂O = 2[Fe₃(SO₄)₂(OH)₆]Me + 6H₂SO₄

   Where Me can be Na⁺ or NH4⁺ indistinctly.
   In this case, according to reaction (10), for every g/l of Fe 1.76 g/l of sulphuric acid is produced, while according to reaction (8) 0.88 g/l is consumed for every g/l of Fe⁺⁺ that is oxidized to Fe⁺⁺⁺. The resulting balance is therefore that for every g/l of Fe⁺⁺ oxidized to Fe⁺⁺⁺ and precipitated as jarosite, the acidity of the solution is increased by 0.88 g/l. According to this, a solution containing 5 g/l of Fe⁺⁺ at the entrance to this stage would have a maximum acidity of 5 g/l at the end of this stage, while in the event of having 20 g/l de Fe⁺⁺ at the entrance, the resulting final solution would have a maximum of 18 g/l of acidity (this is in the event of all the Fe⁺⁺⁺ precipitating out, though it is known that with this acidity at least 2.0 - 3.0 g/l of Fe⁺⁺⁺ remain in solution so the final acidity will really be between 13 and 15 g/l), both of which are favourable conditions for achieving an efficient precipitation of jarosite. For concentrations of Fe⁺⁺⁺ in the entrance solution greater than 20 g/it would be necessary to provide an additional non-contaminating neutralizing agent, as might be the case with BZS if this product is produced in the plant. It is evident that by using an alkali, which has neutralizing power in itself, the range of iron contents in the entrance solution is broadened, permitting solutions containing up to 25 g/l of Fe⁺⁺⁺ to be handled without any problem.

It can be emphasized that as a consequence of using this process as it has been described, it is possible to produce a clean jarosite, whose maximum content of impurities is stated here below:

Zn ≤ 0.10%

Pb ≤ 0.05%

As ≤ 0.10%

Cu ≤ 0.10%

In this way, this invention is different from any other generating jarosite residue since the present invention does not need any external neutralizing agent which might contain contaminating elements (such as would be the case with calcine), and at the same time the precipitation takes place starting from a clean solution, free of solids which could contaminate the final jarosite residue. In the same way, by avoiding the use of calcine in this stage, losses of valuable metals (Zn, Pb, Ag and Au) are significantly reduced and their recovery is increased up to the levels already mentioned, above 99% in the case of zinc and 100% for lead, silver and gold in the leaching stages taken overall.

Given that both the oxygen and the added alkali (in this case NaOH, though it could also be Na₂CO₃ or NH₃) are not contaminating products but instead are components that are incorporated into the jarosite, it is therefore evident that the final jarosite residue is a clean product and, as such, can be used in other industrial processes, such as for example in cement manufacture. This means that the present invention differs from present processes using jarosite, goetite, paragoetite or direct leaching, which generate Fe residues contaminated with other metals (zinc and lead fundamentally, along with copper and/or arsenic on occasions) which prevent their ulterior use and require their storage, for which each year it is becoming more and more difficult to obtain the appropriate permits or which simply cannot be obtained.

Furthermore, by avoiding the use of calcine in the jarosite precipitation stage, the recovery of zinc, lead, silver and gold manages to be increased to above 99% in the leaching stages.

In some cases, in plants where basic zinc sulphate (BZS) is generated by means of precipitation of zinc with lime in solutions of dilute zinc sulphate, either to carry out a bleeding of magnesium from the circuit or simply to control the water balance in it, BZS can be incorporated into the iron oxidation and jarosite precipitation stage, given that the zinc contained in the solid is leached immediately while the gypsum residue which would be incorporated into the jarosite does not constitute an impurity in the event of using this final product in cement manufacture.

The jarosite residue that is obtained constitutes a clean product that can be separated and reutilized for other industrial processes. The solution resulting from this stage, in which most of the iron has been precipitated, is returned to the neutral leaching (b).

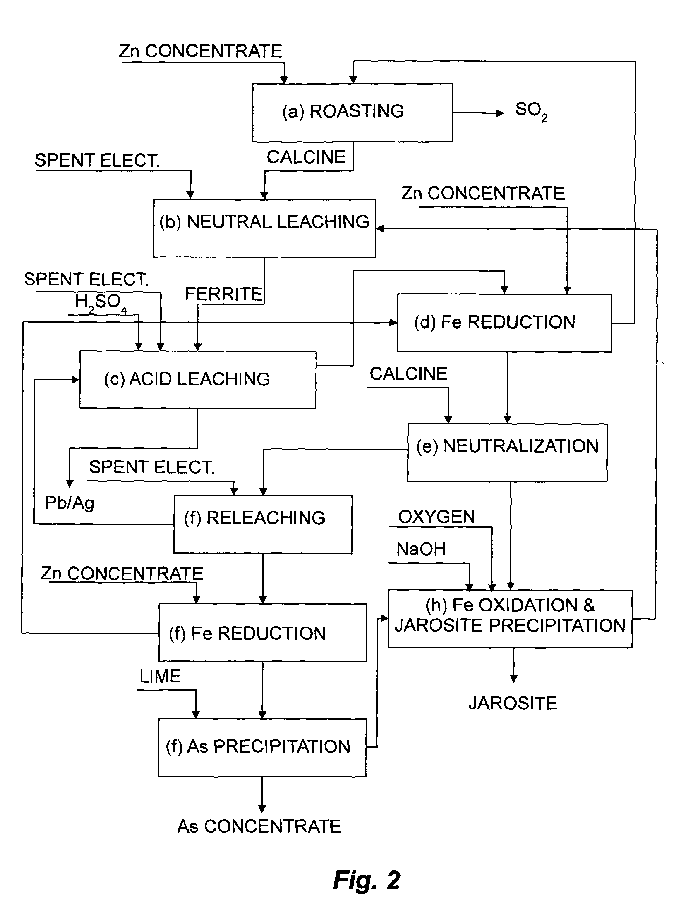

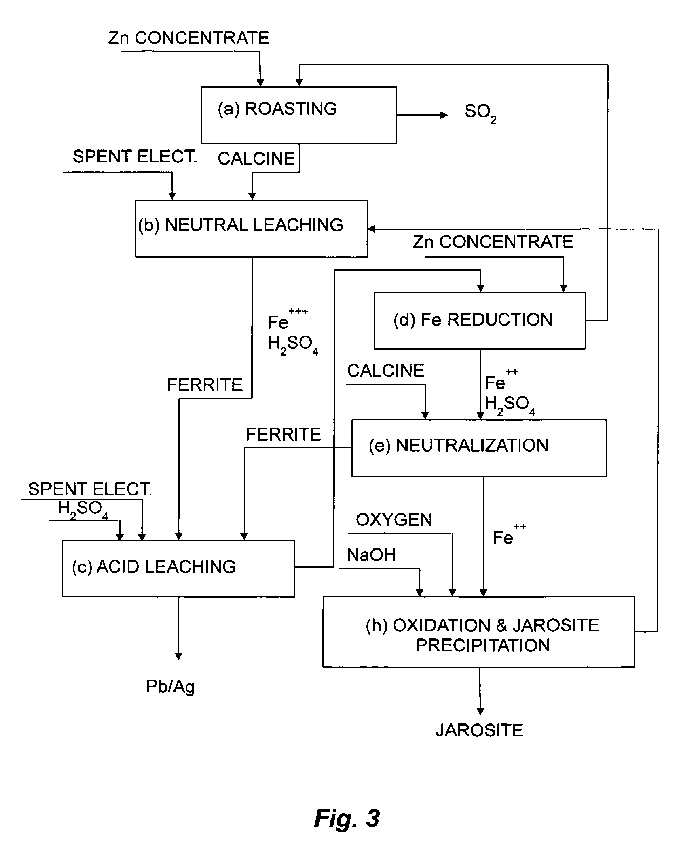

Stages (a), (b) and (c) are common to the large majority of industrial processes (jarosite, goetite, paragoetite). Stages (d) and (e) are used in the goetite process but not in the jarosite process. Stage (f) is novel and is used only when treating concentrates with high arsenic contents. Stage (g) is also novel but is only differentiated from a normal purification stage in its location within the general process. See figures 2 and 3 in order to appreciate the progress of the process when these early stages are suppressed. Stage (h) is novel and its novelty is based on the fact that the solution that enters this stage is a neutral solution of zinc sulphate and ferrous sulphate and free of solids that could contaminate the final jarosite precipitate; it is also based on the fact that the reagents that are added at this stage (oxygen or oxygen-enriched air and an alkali or alkaline salt) are strictly those necessary so that the reactions (8) and (9) can take place.

As a large portion of the acidity generated by the precipitation of jarosite according to reaction (9), about 60%, is consumed in the oxidation process of Fe⁺⁺ to Fe⁺⁺⁺ according to reaction (8), this allows the final acidity to be kept at between pH 1.5 and 13 g/l, values which are entirely compatible with the conditions necessary for the efficient precipitation of jarosite, always providing the content of iron in solution coming from stage (e) is kept in the range between 5 and 25 g/l. The usual practice in any electrolytic zinc plant using jarosite or goetite processes is to have the Fe content in the solution that comes from the acid stage between 15 and 25 g/l. Iron contents of more than 25 g/l in the entrance solution to stage (h) can be tolerated when BZS is available as an additional neutralizing agent.

Nevertheless, it has to be noted that stage (h) would not be able to work without the existence of stages (d) and (e). Indeed, during the acid leaching (c), most of the iron that is dissolved as a consequence of the leaching of zinc ferrites is to be found in the form of Fe⁺⁺⁺. In order to keep this ferric iron in solution a certain acidity needs to be maintained in the solution which in industrial processes normally varies between 10 and 70 g/l. Later on, in stage (d) the Fe⁺⁺⁺ is reduced to Fe⁺⁺ by means of the addition of zinc concentrate so that in the following stage (e) we can proceed to neutralize the residual acidity generated in stage (c). In this way, the neutralization of that residual acidity in (e), together with the consumption of acid in (h) as a consequence of the oxidation of Fe⁺⁺ to Fe⁺⁺⁺ according to reaction (8) in order to be precipitated as jarosite according to reactions (9) or (10), causes the entire process to function harmoniously, achieving the dual result of a very good recovery of metals and the obtaining of a clean iron residue.

It is true that with this invention a heavier investment in equipment is required, as well as the fact that it consumes oxygen or oxygen-enriched air which is not necessary in the jarosite process, but just the advantages achieved with the greater recovery of metals justify these increased costs. Regarding the increased investment cost, for a plant operating with the jarosite or goetite process, the pay back of the investment takes place in a period of less than a year, which makes a project of this kind very attractive from the economic point of view.

In terms of direct leaching processes, either they precipitate the iron in the presence of the residue resulting from the leaching of concentrates, with which they obtain a single residue without any commercial value where the jarosite is mixed with lead, silver, unleached zinc ferrites and elemental sulphur, or they precipitate the iron in a separate stage at atmospheric pressure but in all cases adding calcine as neutralizing agent which contaminates the final iron residue as described in document US 6,475,450, or they use autoclaves for forming a precipitate, generally of hematite, which makes the process very costly and uncompetitive, as in US 5,120,353. Therefore the present invention is also distinguished from direct leaching processes in that: a) it uses a solution free of solids which could otherwise contaminate the final jarosite residue, b) it does not use calcine nor any other neutralizing agent other than the oxygen-enriched air needed for the oxidation of Fe⁺⁺ to Fe⁺⁺⁺ or the alkali needed for the formation of the jarosite precipitate and c) it does not use autoclaves, given that all the stages of the process take place at atmospheric pressure.

This invention is also compatible with those processes which, as well as having a part thereof where the zinc concentrates are roasted in order to produce calcine which is then treated by the usual methods, such as the "conversion process", also have another part thereof, where the zinc concentrate is processed by means of direct leaching and in general making a combination of both processes, as is described in document WO 98/06879. However, in this case this invention can be used advantageously since the solution which exits from the acid leaching (c) can enter a direct leaching stage [stage (i)], where zinc concentrate, spent electrolyte and oxygen-enriched air are added at a temperature between 80°C and the boiling point of the solution, maintaining a sufficiently high acidity (greater than 20 g/l), in such a way that the iron is prevented from precipitating in this stage. In this way, the consumption of oxygen or oxygen-enriched air will be less since the Fe⁺⁺⁺ present in the solution coming from stage (c) is capable on its own of leaching part of the zinc contained in the zinc concentrate, in accordance with reaction (5):

(5) Fe₂(SO₄)₃ + ZnS = FeSO₄ + ZnSO₄ + S°

The residue resulting from this stage (i) could be combined with that from stage (c), since it contains the lead, silver and gold contained in the leached zinc concentrate, but it also contains the elemental sulphur formed according to reaction (5), which could cause some problems for treating this residue, as is occurring nowadays, because of which it could be subjected to an additional stage of flotation in order to separate the sulphur before mixing the two residues.

The solution resulting from this stage (i) would pass directly to the neutralization stage (e), therefore in this case the reduction stage (d) would not be needed.

As can be seen, this invention is also perfectly adapted to those processes that use conventional leaching and direct leaching jointly.

In the case of recovery of iron residues contaminated with valuable metals, coming from previous industrial activities, it would only be necessary to install a stage (c') in parallel with the existing stage (c) where these residues would be treated with exhausted electrolyte and sulphuric acid in order to dissolve the iron, zinc and copper, while other valuable metals such as lead, silver and gold remain insoluble. The residue from this stage is combined with that of the existing stage (c) while the solution would pass on to stage (d) in the same way.

## Claims

1. Hydrometallurgical method for the recovery of zinc in sulphuric medium starting from sulphidic zinc concentrates **characterized in that** the zinc concentrate is subjected to the following stages
a. Roasting of at least part of the zinc concentrate
b. Neutral leaching where zinc oxide is dissolved
c. Acid leaching where zinc ferrites are leached by means of sulphuric acid in the form of spent electrolyte and concentrated sulphuric acid, generating a residue wherein are concentrated the lead, silver and gold contained in the concentrates and a solution rich in zinc and iron
d. Reduction of the Fe⁺⁺⁺ contained in the solution resulting from stage (c) to Fe⁺⁺ by means of the addition of zinc concentrate,
e. Neutralization of the acidity in the solution resulting from stage (d) with calcine
h. Oxidation of iron and precipitation of jarosite from the solution resulting from stage (e), free of contaminating solids, by means of the injection of oxygen or oxygen-enriched air and the addition of an alkali or an alkaline salt.

2. The method of claim 1 **characterized by** comprising a stage (f) of leaching the residue from the neutralization stage (e) with spent electrolyte at the reaction temperature, reduction of Fe⁺⁺⁺ to Fe⁺⁺ with zinc concentrate and precipitation of arsenic and other allied impurities from the solution.

3. The method of claim 1 **characterized by** a stage (g) of cementation of Cu from the solution resulting from stage (e) by means of the addition of zinc dust.

4. The method of claim 1 **characterized by** comprising a stage (i) of reduction of iron and direct leaching, in those processes where RLE processes and direct leaching coexist, where the solution coming from the acid stage (c) is treated with zinc concentrates and exhausted electrolyte at the same time as injecting oxygen or oxygen-enriched air at a temperature no less than 80°C and no greater than the boiling point of the solution, keeping the acidity sufficiently high for preventing the precipitation of jarosite, with the unreacted solids being combined with the lead-silver residue from the acid leaching (c), though they can alternatively be subjected to a flotation process in order to separate out elemental sulphur, while the solution would pass directly to the neutralization stage (e)

5. The method of claim 1 **characterized in that** the solution resulting from stage (c) contains between 5 and 25 g/l of Fe⁺⁺⁺ and between 10 and 70 g/l of sulphuric acid

6. The method of claim 1 **characterized in that** the solution resulting from stage (d) contains between 5 and 25 g/l of Fe⁺⁺ and between 10 and 70 g/l of sulphuric acid

7. The method of claim 1 **characterized in that** the solution resulting from stage (e) contains between 5 and 25 g/l of Fe⁺⁺ and an acidity between pH 5.2 and 10 g/l

8. The method of claim 1 **characterized in that** in stage (h) oxygen or oxygen-enriched air is injected in the quantity required for oxidizing the Fe⁺⁺ present in solution to Fe⁺⁺⁺ until the content of Fe⁺⁺ in solution has been reduced to below 2 g/l.

9. The method of claim 1 **characterized in that** in stage (c) the temperature is kept at between 80°C and the boiling point of the solution.

10. The method of claim 1 **characterized in that** in stage (h) the temperature is kept at between 80°C and the boiling point of the solution.

11. The method of claim 1 **characterized in that** in stage (h) the final acidity is kept at between pH 2 and 15 g/l

12. The method of claim 1 **characterized in that** in stage (h) the stoichiometric quantity of alkali is fed in accordance with reaction (9)
(9) 3Fe₂(SO₄)₃ + 2MeOH + 10H₂O = 2[Fe₃(SO₄)₂(OH)₆]Me + 5H₂SO₄
Where Me can be Na⁺ or NH4⁺.

13. The method of claim 1 **characterized in that** in stage (h) the alkali used can be NaOH or NH₃.

14. The method of claim 1 **characterized in that** in stage (h) the stoichiometric quantity of an alkaline salt is fed in accordance with reaction (10)
(10) 3Fe₂(SO₄)₃ + Me₂SO₄ + 12H₂O = 2[Fe₃(SO₄)2(OH)₆]Me + 6H₂SO₄
Where Me can be Na⁺ or NH4⁺, indifferently.

15. The method of claim 1 **characterized in that** in stage (h) the alkaline salt used can be Na₂SO₄ or NH₄SO₄

16. The method of claim 1 **characterized in that** all the stages (b) to (h) work at atmospheric pressure.
